(19) Europäisches Patentamt
European Patent Office
Office européen des brevets

(11) **EP 3 707 741 B1**

(12) **EUROPÄISCHE PATENTSCHRIFT**

(45) Veröffentlichungstag und Bekanntmachung des Hinweises auf die Patenterteilung:
**12.07.2023  Patentblatt 2023/28**

(21) Anmeldenummer: **18815554.3**

(22) Anmeldetag: **28.11.2018**

(51) Internationale Patentklassifikation (IPC):
**H01H 33/662** $^{(2006.01)}$      **H02B 13/035** $^{(2006.01)}$

(52) Gemeinsame Patentklassifikation (CPC):
**H01H 33/66238; H02B 13/0354; H01H 2033/66246**

(86) Internationale Anmeldenummer:
**PCT/EP2018/082783**

(87) Internationale Veröffentlichungsnummer:
**WO 2019/120909 (27.06.2019 Gazette 2019/26)**

(54) **GASISOLIERTE SCHALTANLAGE MIT EINEM ANTRIEBSSTANGE MIT KOMPENSATIONSELEMENT**

GAS INSULATED SWITCHGEAR WITH A CONTROL ROD WITH COMPENSATION ELEMENT

APPAREILLAGE DE CONNEXION ISOLÉ PAR GAZ AVEC UNE TIGE D'ENTRAÎNEMENT AVEC ÉLÉMENT DE COMPENSATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2017  DE 102017223548**

(43) Veröffentlichungstag der Anmeldung:
**16.09.2020  Patentblatt 2020/38**

(73) Patentinhaber: **Siemens Aktiengesellschaft 80333 München (DE)**

(72) Erfinder: **SCHÜMANN, Ulf 14624 Dallgow-Döberitz (DE)**

(74) Vertreter: **Siemens Patent Attorneys Postfach 22 16 34 80506 München (DE)**

(56) Entgegenhaltungen:
**DE-A1- 19 517 287**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine gasisolierte Schaltanlage mit einer Antriebsstange mit mindestens einem Kompensationselement für Vakuumschaltröhren.

Im Stand der Technik werden Vakuumschaltröhren bei gasisolierten Schaltanlagen in einem mit Druck beaufschlagtem Gasbehälter betrieben. Die kinematische Kontaktseparierung erfolgt durch einen Antrieb, der außerhalb des Behälters angeordnet ist oder sein kann, wobei der Antrieb über eine Antriebsstange erfolgt und die Antriebsstange durch eine volumenneutrale Verbindung/Durchführung in den Innenbereich des Gasbehälters geführt wird. Ist der Antrieb im Gasbehälter angeordnet, verhält sich diese Anordnung im Prinzip gleich. In einer solchen Anordnung muss zur Kontaktseparierung eine zusätzliche Volumenänderungsarbeit aufgebracht werden, da die Bewegung des Bewegkontaktes zur Kontaktseparierung der Vakuumschaltröhre über einen Balg erfolgt, der eben keine volumenneutrale Verbindung/Durchführung darstellt. Die Bewegung des Balges der Vakuumschaltröhre verändert also das Gasvolumen im Gasbehälter und in der Vakuumschaltröhre.

Die DE19517287A1 offenbart beispielsweise eine Vakuumschaltröhre in einem gasisolierten Gehäuse, wobei ein Bewegkontakt der Vakuumschaltröhre mit einer Antriebsstange bewegbar ist, wobei die Antriebsstange mittels eines aus einem Kunststoff gebildeten Faltenbalg gasdicht in das gasisolierte Gehäuse geführt wird.

Ist der Überdruck im Gasbehälter relativ klein, zum Beispiel 0,5 bis 1 bar Überdruck gegenüber dem Normaldruck außerhalb des Gasbehälters, ist die zu leistende Volumenänderungsarbeit relativ klein. Die Verwendung von axialen Durchführungen, mit Balg, durch die Gasbehälterwanderung führt zu einer Reduktion der notwendigen Volumenänderungsarbeit bei einem Schaltprozess.

Aufgabe der Erfindung ist es nun eine Anordnung bereitzustellen, die die Nachteile des Standes der Technik überwindet und insbesondere die Volumenänderungsarbeit reduziert, kompensiert oder überkompensiert.

Diese Aufgabe wird durch den unabhängigen Anspruch 1 und die von diesen abhängigen Ansprüchen gelöst.

Bei einem Ausführungsbeispiel handelt es sich um eine gasisolierte Schaltanlage mit einer Antriebsstange mit mindestens einem Kompensationselement für Vakuumschaltröhren, wobei die Antriebsstange mittels einer Durchführung in einen Gasbehälter geführt wird und die Antriebsstange mit einen Bewegkontakt der Vakuumschaltröhre derart gekoppelt ist, dass der Bewegkontakt über die Antriebsstange bewegbar ist, wobei das mindestens eine Kompensationselement aus mindestens einem hermetisch verschlossenen Balg gebildet ist und der mindestens eine Balg entweder an mindestens einem Punkt mit der Antriebsstange verbunden ist oder über mindestens ein Eingriffsmittel mit der Antriebsstange verbunden ist und das Eingriffsmittel fest oder eingreifend mit dem mindestens einem Kompensationselement verbunden oder verbindbar ist, und der mindestens eine Balg mit einem Gasbehälter verbindbar ist durch den die Antriebsstange geführt ist, und dass das mindestens eine Kompensationselement zumindest einen Teil der Kräfte, die vom Vakuumröhrenbalg auf die Antriebsstange wirken, kompensiert, zumindest in einer Bewegungsrichtung der Antriebsstange.

Die Eingriffsmittel sind also Kopplungsmittel, die entweder eine feste Verbindung oder eine lösbare Verbindung oder eine nur anliegende Verbindung ermöglichen, zum Beispiel auch in Verbindung mit einem weiteren Eingriffselement.

Bevorzugt wird, dass das mindestens eine Kompensationselement aus zwei die Antriebsstange umgebenden Bälgen gebildet wird.

Insbesondere wird bevorzugt, dass die die Antriebsstange umgebende Bälge hermetisch dicht miteinander verschlossen sind, so dass diese ein ringförmiges, abgeschlossenes Volumen bilden. Dieses Volumen, wie auch die anderen Volumina der Kompensationselemente, ist mit einer Änderung der Position der Antriebsstange veränderbar. Durch die Kompensationselemente werden lediglich resultierende Kräfte in Richtung der Längsachse der Antriebsstange gebildet und/oder kompensiert.

Auch wird bevorzugt, dass zwei oder mehr Kompensationselemente derart um die Antriebsstange angeordnet sind, dass durch die Kompensationselemente lediglich resultierende Kräfte in Richtung der Längsachse der Antriebsstange gebildet werden. Insbesondere wird durch eine solche Anordnung verhindert, dass auf die Antriebsstange Kräfte senkrecht zur Längsachse der Antriebsstange wirken.

Bevorzugt wird auch, dass drei Kompensationselemente derart um die Antriebsstange angeordnet sind, dass durch die Kompensationselemente lediglich resultierende Kräfte in Richtung der Längsachse der Antriebsachse gebildet werden.

Insbesondere wird bevorzugt das drei Kompensationselemente symmetrisch um die Längsachse der Antriebsstange angeordnet sind.

Weiter wird auch bevorzugt, dass die Kompensationselemente auf den Eckpunkten eines gleichschenkligen Dreiecks angeordnet sind, und sich die Längsachse der Antriebsstange senkrecht durch den Mittelpunkt der Dreiecksanordnung erstreckt.

Bevorzugt wird auch, dass das mindestens eine Kompensationselement über

    a) ein ringförmiges Eingriffsmittel oder
    b) ein scheibenförmiges Eingriffsmittel,

fest mit der Antriebsstange verbunden ist oder mit der Antriebsstange eingreifend koppelbar ist. Eingreifend koppelbar meint in diesem Zusammenhang, dass die Eingriffsmittel an oder in ein Angriffsmittel derart eingreift, dass zumindest bei einer Schaltbewegung der Antriebsstange diese zumindest teilweise mit den Kompensationselement gekoppelt ist und so die zu leistende Volumenänderungsarbeit beeinflusst wird.

Die teilweise Kopplung ist beispielsweise derart bewirkbar, dass nur bei einem Teil der Schaltbewegung die Antriebsstange mit dem mindestens einen Kompensationselement gekoppelt ist.

Auch wird bevorzugt, dass das mindestens eine Kompensationselement im Innern einen Gasdruck aufweist, der mit dem in der Vakuumschaltröhre vergleichbar ist. Vergleichbar heißt in diesem Zusammenhang, dass die Drücke im Kompensationselement und in der Vakuumschaltröhre nicht um mehr als 0,25 bar, bevorzugt nicht mehr als 0,1 bar, insbesondere bevorzugt um nicht mehr als 0,01 bar voneinander abweichen. Das heißt beispielsweise, dass ein Druck im Kompensationselement von 0,1 bar, bei einem Druck von 10^-5 mbar oder weniger in der Vakuumschaltröhre diese Voraussetzung erfüllt. Alternativ kann das mindestens eine Kompensationselement auch mit einem Gas befüllt sein, das einen erhöhten Druck gegenüber der Vakuumschaltröhre aufweist und somit resultierende Kräfte, insbesondere in Richtung der Längsachse der Antriebsstange, bildet und/oder kompensiert.

Auch wird bevorzugt, dass das mindestens eine Kompensationselement bei der Bewegung der Antriebsstange eine Volumenänderungsarbeit verrichtet, wobei sich die Volumenänderungsarbeit des mindestens einen Kompensationselements berechnet nach

$$\Delta W = \Delta p * A * S,$$

mit $\Delta p$ der Druckdifferenz zwischen dem Gasdruck in dem Kompensationselement und dem Gasdruck des das Kompensationselement umgebenden Gases und A der Fläche des Kompensationselementes senkrecht zur Bewegungsrichtung der Antriebsstange und S dem Hub der Antriebsstange bei Schaltvorgängen.

Bevorzugt wird auch, dass das Gas im Gasbehälter eines oder mehrere Gase von SF6, einem oder mehreren Ketonen, insbesondere Fluorketonen, einem Nitril und/oder einem Siloxan und/oder Stickstoff und/oder Sauerstoff besteht oder zumindest eines oder mehrere dieser Gase enthält, insbesondere als Isoliergas und/oder Schaltgas enthält.

Im Folgenden wird der Erfindungsgegenstand anhand von Figuren näher erläutert:

Figur 1: schematische Schnittdarstellung durch einen Gasbehälter mit einer erfindungsgemäßen Antriebsstange, einer Vakuumschaltröhre und einem Kompensationselement;

Figur 2: Frontalansicht einer erfindungsgemäßen Antriebsstange mit drei Kompensationselementen;

Figur 3: Schnittbild durch eine Antriebsstange mit erfindungsgemäßem Kompensationselement.

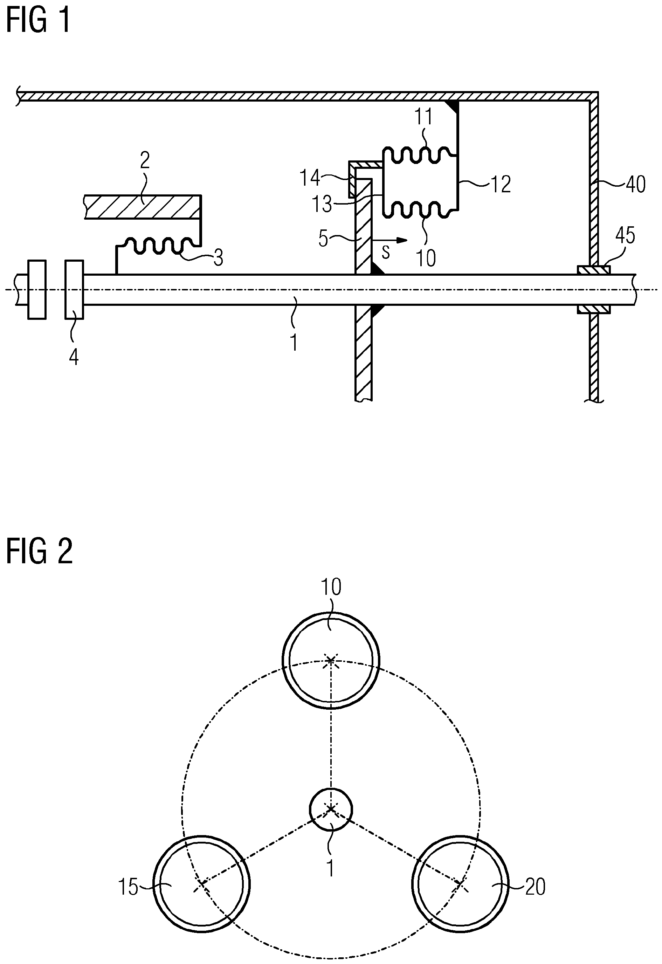

Die Figur 1 zeigt einen Schnitt durch einen Gasbehälter 40 mit einer erfindungsgemäßen Antriebsstange 1 zum Bewegen des Bewegkontaktes 4 einer Vakuumschaltröhre 2. Der Bewegkontakt 4 der Vakuumschaltröhre 2 ist über einen gasdichtverschlossenen Balg 3 mit der Antriebsstange 1 gekoppelt. Die Antriebsstange 1 wird über eine Durchführung 45 aus dem Gasbehälter 40 herausgeführt.

Zur zumindest teilweisen Kompensation der Volumenänderungsarbeit in zumindest einer Bewegrichtung der Antriebsstange 1 ist in der Figur 1 ein Kompensationselement 10 vorhanden, das die Volumenänderung, die durch eine Bewegung des Vakuumschaltröhrenbalgs 3 erfolgt, kompensiert.

Das Kompensationselement 10 verfügt im gezeigten Beispiel über einen ersten Balgverschluss 12 und einen zweiten Balgverschluss 13, die den Balg 11 verschließen und so ein hermetisch geschlossenes Kompensationselement 10 bilden. Das Kompensationselement 10 ist mit einer Seite, hier mit der Seite, die den ersten Balgverschluss 12 aufweist, mit dem Gasbehälter 40 verbunden. Die Koppelung des Kompensationselementes 10 mit der Antriebsstange 1 erfolgt über ein Eingriffsmittel 5, das fest auf der Antriebsstange 1 befestigt ist. Im hier gezeigten Fall ist das Eingriffsmittel 5 nicht fest mit dem Kompensationselement 10 verbunden, sondern das Eingriffsmittel 5 greift in ein Eingriffselement 14 ein und führt so bei einer Bewegung der Antriebsstange 1 zu einer Veränderung des Volumens des Kompensationselements 10, das der Volumenänderung durch den Vakuumschaltröhrenbalg 3 entgegenwirkt.

Der Druck innerhalb des Kompensationselements 10 und innerhalb der Vakuumschaltröhre 2 ist bevorzugt identisch oder weicht nur geringfügig von demselben ab. Eine geringfügige Abweichung liegt vor, wenn der Druck oder die Drücke im Kompensationselement und in der Vakuumschaltröhre nicht um mehr als 0,25 bar, bevorzugt nicht mehr als 0,1 bar, insbesondere bevorzugt um nicht mehr als 0,01 bar voneinander abweichen. Das heißt beispielsweise, dass ein Druck im Kompensationselement von 0,1 bar, bei einem Druck von 10^-5 mbar oder weniger in der Vakuumschaltröhre, diese Voraussetzung erfüllt.

Die Figur 2 zeigt bei einem horizontalen Einbau der Schaltstange eine Frontalansicht der Schaltstange 1 mit drei Kompensationselementen 10, 15, 20, die um die Schaltstange herum angeordnet sind. Die hier gezeigte symmetrische Anordnung der drei Kompensationselemente 10, 15, 20 um die Antriebsstange 1 herum bewirkt, dass durch die Kompensationselemente keine zusätzlichen Kräfte auf die Schaltstange wirken, die senkrecht zur Längsachse der Antriebsstange 1 gerichtet sind.

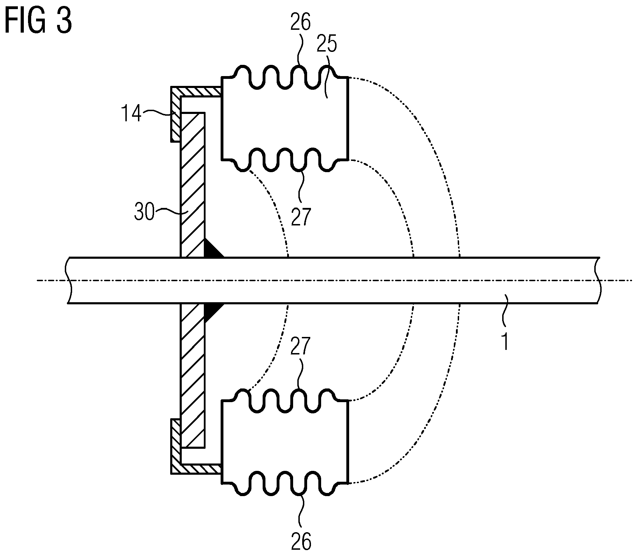

Die Figur 3 zeigt eine Variation eines Kompensationselements 25, das aus einem ersten die Antriebsstange 1 umgebenden Balg 26 und einem zweiten die Antriebsstange 1 umgebenden Balg 27 gebildet wird. Auch das Kompensationselement 25 ist hermetisch verschlossen, vergleichbar mit dem Kompensationselement 10 der Figur 1. Das Kompensationselement 25 der Figur 3 weist eine ringförmige Struktur auf, wobei eine Seite, wieder analog mit der Figur 1, an dem Gasbehälter 40 befestigt oder zu befestigen ist, und die zweite Seite über ein Eingriffsmittel 30, welches in diesem Beispiel mit der Antriebsstange 1 fest verbunden ist, mit der Antriebsstange 1 gekoppelt wird. Die Kopplung der Figur 3 erfolgt wieder über ein Eingriffselement 14, alternativ kann das Eingriffselement 14 aber auch fest mit dem Eingriffsmittel 30 oder der Antriebsstange 1 verbunden sein oder die Antriebsstange 1 oder das Eingriffsmittel 30 direkt mit dem Kompensationselement 25 verbunden sein.

**Patentansprüche**

1. Gasisolierte Schaltanlage mit einer Antriebsstange (1) mit mindestens einem Kompensationselement (10, 15, 20, 25) für Vakuumschaltröhren (2), wobei die Antriebsstange (1) mittels einer Durchführung (45) in einen Gasbehälter (40) geführt wird und die Antriebsstange (1) mit einen Bewegkontakt (4) der Vakuumschaltröhre (2) derart gekoppelt ist, dass der Bewegkontakt (4) über die Antriebsstange (1) bewegbar ist,
**dadurch gekennzeichnet dass**

   das mindestens eine Kompensationselement (10, 15, 20,25) aus mindestens einem hermetisch verschlossenen Balg (10) gebildet ist, und der mindestens eine Balg (10)

   a) entweder an mindestens einem Punkt mit der Antriebsstange (1) verbunden ist, oder
   b) über mindestens ein Eingriffsmittel (5, 30) mit der Antriebsstange verbunden oder koppelbar ist und das Eingriffsmittel (5, 30) fest oder eingreifend mit dem mindestens einen Kompensationselement (10, 15, 20,25) verbunden ist oder verbindbar ist

   und der mindestens eine Balg (10) mit dem Gasbehälter (40) verbindbar ist, durch den die Antriebsstange geführt ist, und dass das mindestens eine Kompensationselement (10, 15, 20, 25) zumindest einen Teil der Kräfte, die vom Vakuumröhrenbalg (3) auf die Antriebsstange (1) wirken, kompensiert, zumindest in einer Bewegungsrichtung der Antriebsstange.

2. Gasisolierte Schaltanlage nach Anspruch 1,
**dadurch gekennzeichnet dass**
das mindestens eine Kompensationselement (25) aus zwei die Antriebsstange (1) umgebenen Bälgen (26, 27) gebildet wird.

3. Gasisolierte Schaltanlage nach Anspruch 1,
**dadurch gekennzeichnet dass**
zwei oder mehr Kompensationselemente (10, 15, 20) derart um die Antriebsstange (1) angeordnet sind, dass durch die Kompensationselemente (10, 15, 20) resultierende Kräfte in Richtung der Längsachse der Antriebsstange (1) gebildet werden.

4. Gasisolierte Schaltanlage nach Anspruch 3,
**dadurch gekennzeichnet dass**
drei Kompensationselemente (10, 15, 20) derart um die Antriebsstange (1) angeordnet sind, dass durch die Kompensationselemente (10, 15, 20) resultierende Kräfte in Richtung der Längsachse der Antriebsstange (1) gebildet werden.

5. Gasisolierte Schaltanlage nach Anspruch 4,
**dadurch gekennzeichnet dass**
drei Kompensationselemente (10, 15, 20) symmetrisch um die Längsachse der Antriebsstange (1) angeordnet sind.

6. Gasisolierte Schaltanlage nach einem der vorstehenden Ansprüche,
**dadurch gekennzeichnet dass**

   das mindestens eine Kompensationselement (10, 15, 20, 25) über

   a) ein ringförmiges Eingriffsmittel (5, 30), oder
   b) ein scheibenförmiges Eingriffsmittel (5, 30),

   fest mit der Antriebsstange (1) verbunden ist oder mit der Antriebsstange (1) eingreifend koppelbar ist.

7. Gasisolierte Schaltanlage nach einem der vorstehenden Ansprüche,
**dadurch gekennzeichnet dass**
das mindestens eine Kompensationselement (10, 15, 20, 25) im Innern einen Gasdruck aufweist, der mit dem in der Vakuumschaltröhre (2) vergleichbar ist oder das Kompensationselement (10) mit einem Gas befüllt ist, das einen höheren Druck aufweist als die Vakuumschaltröhre (2).

8. Gasisolierte Schaltanlage nach Anspruch 1,
**dadurch gekennzeichnet dass**

   das mindestens eine Kompensationselement (10, 15, 20, 25) bei der Bewegung der Antriebsstange (1) eine Volumenänderungsarbeit verrichtet, wobei sich die Volumenänderungsarbeit des mindestens einen Kompensationselements (10, 15, 20, 25) berechnet nach:

$$\Delta W = \Delta p * A * S,$$

mit Δp der Druckdifferenz zwischen dem Gasdruck in dem Kompensationselement (10, 15, 20, 25) und dem Gasdruck des das Kompensationselement (10, 15, 20, 25) umgebenen Gases und A der Fläche des Kompensationselements (10, 15, 20, 25) senkrecht zur Bewegungsrichtung der Antriebsstange und S dem Hub der Antriebsstange bei Schaltvorgängen.

9. Gasisolierte Schaltanlage nach Anspruch 1, **dadurch gekennzeichnet, dass** im Gasbehälter eines oder mehrere Gase von SF6, einem oder mehreren Ketonen, insbesondere Fluorketonen, einem Nitril und/oder einem Siloxan und/oder Stickstoff und/oder Sauerstoff als ein Isoliergas und/oder Schaltgas vorhanden ist.

**Claims**

1. Gas-insulated switchgear having a drive rod (1) having at least one compensation element (10, 15, 20, 25) for vacuum interrupters (2), wherein the drive rod (1) is guided into a gas container (40) by means of a feed-through (45) and the drive rod (1) is coupled to a moving contact (4) of the vacuum interrupter (2) in such a way that the moving contact (4) can be moved via the drive rod (1), **characterized in that**

   the at least one compensation element (10, 15, 20, 25) is formed from at least one hermetically sealed bellows (10), and the at least one bellows (10)

   a) is either connected to the drive rod (1) at at least one point, or
   b) is connected to or can be coupled to the drive rod via at least one engagement means (5, 30) and the engagement means (5, 30) is connected or can be connected to the at least one compensation element (10, 15, 20, 25) in a fixed or engaging manner

   and the at least one bellows (10) can be connected to the gas container (40) through which the drive rod is guided, and **in that** the at least one compensation element (10, 15, 20, 25) compensates at least some of the forces which act on the drive rod (1) from the vacuum interrupter bellows (3), at least in one movement direction of the drive rod.

2. Gas-insulated switchgear according to Claim 1, **characterized in that** the at least one compensation element (25) is formed from two bellows (26, 27) surrounding the drive rod (1).

3. Gas-insulated switchgear according to Claim 1, **characterized in that** two or more compensation elements (10, 15, 20) are arranged around the drive rod (1) in such a way that resulting forces are generated by the compensation elements (10, 15, 20) in the direction of the longitudinal axis of the drive rod (1).

4. Gas-insulated switchgear according to Claim 3, **characterized in that** three compensation elements (10, 15, 20) are arranged around the drive rod (1) in such a way that resulting forces are generated by the compensation elements (10, 15, 20) in the direction of the longitudinal axis of the drive rod (1).

5. Gas-insulated switchgear according to Claim 4, **characterized in that** three compensation elements (10, 15, 20) are arranged symmetrically around the longitudinal axis of the drive rod (1) .

6. Gas-insulated switchgear according to one of the preceding claims, **characterized in that** the at least one compensation element (10, 15, 20, 25) is connected to the drive rod (1) in a fixed manner or can be coupled to the drive rod (1) in an engaging manner via

   a) an annular engagement means (5, 30), or
   b) a disk-shaped engagement means (5, 30).

7. Gas-insulated switchgear according to one of the preceding claims, **characterized in that** the at least one compensation element (10, 15, 20, 25) has, in the interior, a gas pressure which is comparable to that in the vacuum interrupter (2) or the compensation element (10) is filled with a gas which has a higher pressure than the vacuum interrupter (2).

8. Gas-insulated switchgear according to Claim 1, **characterized in that**

   the at least one compensation element (10, 15, 20, 25), upon the movement of the drive rod (1), performs a volume-changing work, wherein the volume-changing work of the at least one compensation element (10, 15, 20, 25) is calculated according to:

$$\Delta W = \Delta p * A * S,$$

where $\Delta p$ is the pressure difference between the gas pressure in the compensation element (10, 15, 20, 25) and the gas pressure of the gas surrounding the compensation element (10, 15, 20, 25) and A is the area of the compensation element (10, 15, 20, 25) perpendicular to the movement direction of the drive rod and S is the stroke of the drive rod during switching procedures.

9. Gas-insulated switchgear according to Claim 1, **characterized in that** one or more gases of SF6, one more ketones, in particular fluoroketones, a nitrile and/or a siloxane and/or nitrogen and/or oxygen is present in the gas container as an insulating gas and/or switching gas.

**Revendications**

1. Appareillage de connexion à isolation par du gaz, comprenant une barre (1) d'entraînement avec au moins un élément (10, 15, 20, 25) de compensation pour des tubes (2) interrupteurs à vide, dans lequel la barre (1) d'entraînement est guidée au moyen d'une traversée (45) dans un récipient (40) à gaz et la barre (1) d'entraînement est accouplée à un contact (4) mobile des tubes (2) interrupteurs à vide, de manière à pouvoir déplacer le contact (4) mobile par la barre (1) d'entraînement, **caractérisé en ce que**

   le au moins un élément (10, 15, 20, 25) de compensation est formé d'au moins un soufflet (10) fermé hermétiquement et le au moins un soufflet (10)

   a) ou bien est relié en au moins un point à la barre (1) d'entraînement, ou bien
   b) est relié ou peut être accouplé à la barre d'entraînement par au moins un moyen (5, 30) d'intervention et le moyen (5, 30) d'intervention est relié ou peut être relié de manière fixe ou avec pénétration au au moins un élément (10, 15, 20, 25) de compensation,

   et le au moins un soufflet (10) peut être relié au récipient (40) à gaz, dans lequel passe la barre d'entraînement, et
   **en ce que** le au moins un élément (10, 15, 20, 25) de compensation compense, au moins dans un sens de déplacement de la barre d'entraînement, au moins une partie des forces, qui agissent par le soufflet (3) du tube à vide sur la barre (1) d'entraînement.

2. Appareillage de connexion à isolation par du gaz suivant la revendication 1, **caractérisé en ce que** le au moins un élément (25) de compensation est formé de deux soufflets (26, 27) entourant la barre (1) d'entraînement.

3. Appareillage de connexion à isolation par du gaz suivant la revendication 1, **caractérisé en ce que** deux ou plusieurs éléments (10, 15, 20) de compensation sont disposés autour de la barre (1) d'entraînement, de manière à ce que des forces provenant des éléments (10, 15, 20) de compensation soient formées dans la direction de l'axe longitudinal de la barre (1) d'entraînement.

4. Appareillage de connexion à isolation par du gaz suivant la revendication 3, **caractérisé en ce que** trois éléments (10, 15, 20) de compensation sont disposés autour de la barre (1) d'entraînement, de manière à ce que des forces provenant des éléments (10, 15, 20) de compensation soient formées dans la direction de l'axe longitudinal de la barre (1) d'entraînement.

5. Appareillage de connexion à isolation par du gaz suivant la revendication 4, **caractérisé en ce que** trois éléments (10, 15, 20) de compensation sont disposés symétriquement autour de l'axe longitudinal de la barre (1) d'entraînement.

6. Appareillage de connexion à isolation par du gaz suivant l'une des revendications précédentes, **caractérisé en ce que** le au moins un élément (10, 15, 20, 25) de compensation est, par

   a) un moyen (5, 30) d'intervention annulaire ou
   b) un moyen (5, 30) d'intervention en forme de disque, relié fixement à la barre (1) d'entraînement ou peut être accouplé avec pénétration avec la barre (1) d'entraînement.

7. Appareillage de connexion à isolation par du gaz suivant l'une des revendications précédentes, **caractérisé en ce que** le au moins un élément (10, 15, 20, 25) de compensation a à l'intérieur une pression gazeuse, qui est comparable à celle dans le tube (2) interrupteur à vide ou l'élément (10) de compensation est rempli d'un gaz, qui a une pression plus haute que le tube (2) interrupteur à vide.

8. Appareillage de connexion à isolation par du gaz suivant la revendication 1,
   **caractérisé en ce que**

   le au moins un élément (10, 15, 20, 25) de compensation effectue, lors du déplacement de la barre (1) d'entraînement, un travail de variation du volume, le travail de variation du volume du au moins un élément (10, 15, 20, 25) de compensation se calculant suivant :

   $$\Delta W = \Delta p * A * S,$$

   $\Delta p$ étant la différence de pression entre la pression du gaz dans l'élément (10, 15, 20, 25) de compensation et la pression du gaz entourant l'élément (10, 15, 20, 25) de compensation et A étant la surface de l'élément (10, 15, 20, 25) de compensation perpendiculairement à la direction de déplacement de la barre d'entraînement et S étant la course de la barre d'entraînement dans des opérations de connexion.

9. Appareillage de connexion à isolation par du gaz suivant la revendication 1,
   **caractérisé en ce que**
   dans le récipient à gaz, il y a un ou plusieurs gaz parmi SF6, une ou plusieurs cétones, notamment des fluorocétones, un nitrile et/ou un siloxane et/ou de l'azote et/ou de l'oxygène comme gaz isolant et/ou comme gaz de connexion.

FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19517287 A1